# EUROPEAN PATENT SPECIFICATION

(11) **EP 2 009 943 B1**
(45) Date of publication and mention of the grant of the patent: **06.04.2011**
(21) Application number: 07290792.6
(22) Date of filing: 25.06.2007
(51) Int. Cl.: H04W 72/12

(54) **Uplink transmission in mobile networks**
Aufwärtsübertragung in mobilen Netzen
Transmission de liaison montante dans des réseaux mobiles

(43) Date of publication of application: 31.12.2008
(73) Proprietor: Alcatel Lucent, 75008 Paris (FR)
(72) Inventor: Doetsch, Uwe, Dr., 74392 Freudental (DE); Schneider, Wolfgang, 70825 Korntal-Münchingen (DE)
(74) Representative: Schmidt, Werner Karl

(56) References cited:
- US-A1- 2006 189 334
- US-A1- 2006 209 869
- "Universal Mobile Telecommunications System (UMTS); FDD enhanced uplink; Overall description; Stage 2 (3GPP TS 25.309 version 6.6.0 Release 6); ETSI TS 125 309" ETSI STANDARDS, EUROPEAN TELECOMMUNICATIONS STANDARDS INSTITUTE, SOPHIA-ANTIPO, FR, vol. 3-R2, no. V660, March 2006 (2006-03), XP014034283 ISSN: 0000-0001
- SHARMA G ET AL: "Moving towards HSUPA (high speed uplink packet access): a complete 3.5 G wireless system" PERSONAL WIRELESS COMMUNICATIONS, 2005. ICPWC 2005. 2005 IEEE INTERNATIONAL CONFERENCE ON NEW DELHI, INDIA JAN. 23-25, 2005, PISCATAWAY, NJ, USA,IEEE, 23 January 2005 (2005-01-23), pages 174-177, XP010798540 ISBN: 0-7803-8964-6

## Description

### Field of the invention

The present invention relates to the field of mobile networks, in particular to the uplink transmission technology of radio access networks.

### Background and prior art

A radio access network (RAN) is part of a mobile telecommunication system and implements a radio access technology. Conceptually, it sits between the mobile phone and the core network (CN). The RAN performs the radio functionality of the network, provides the connection to the CN, and typically includes a controller and several transmitters/receivers.

One of the third-generation (3G) mobile phone technologies is Universal Mobile Telecommunications System (UMTS). UMTS provides an enhanced range of multimedia services and speeds convergence between telecommunications, IT (Information technology), media and content industries to deliver new services and create fresh revenue generating opportunities. UMTS delivers low cost, high capacity mobile communications offering high data rates.

UTRAN, short for UMTS Terrestrial Radio Access Network, is a collective term for NodeB's (transmitter/receiver) and Radio Network Controllers (RNC) which make up the UMTS radio access network, wherein the NodeB's are the base stations of the UTRAN. The RNC provides control functionalities for one or more NodeB's. A NodeB and a RNC can be the same device, although typical implementations have a separate RNC located in a central office serving multiple NodeB's.

HSUPA stands for High Speed Uplink Packet Access and describes an extremely efficient procedure for sending data in a great performance way through UMTS devices. HSUPA enables high-speed symmetrical data communications such as voice over internet protocol (VoIP) and interactive multimedia by better data rates and shorter delay. The suitable procedure for the receiving is called High Speed Downlink Packet Access, briefly HSDPA. Both procedures resemble each other technically and by the employment of special modulation procedures allow a higher extent of utilization of the net infrastructure. The power spectrum of the UMTS networks is extended at relatively small expenditure and improved intensive data services can be offered. Thus HSUPA opens further areas for innovations and new business possibilities.

In UMTS, all users share one common uplink resource. When data is transmitted via HSUPA, the NodeB is responsible for the allocation of the available uplink resources to the users, i.e. to specify the part of the common uplink resource which a user equipment (UE; term for mobile phone in UMTS) is allowed to use. The NodeB shall make optimum use of the available uplink resources. Depending on the traffic characteristics of each user, different delay and throughput requirements have to be met. For users with delay sensitive applications the Round Trip Time (RTT) needs to be minimized. For example, gaming and TCP/IP download, which leads to TCP/IP acknowledgements in the uplink, are known as delay sensitive applications. Furthermore, the throughput needs to be maximized for users having data intensive applications, e.g. FTP file upload. A powerful HSUPA scheduler in the NodeB shall consider these requirements in the resource allocation strategy although he has no explicit knowledge of the user's traffic characteristics.

In HSUPA the allocation of uplink resources is done by sending absolute or relative grants from the NodeB to the UEs. The UE will send only as much data as allowed by the grant so that only the granted uplink resource is used Along with the uplink transmission of application data, each UE sends scheduling information (SI) to the NodeB. The SI contains information on the filling status of the UE internal data buffers, the UE transmission power and the logical channel priority. Based on these values, the NodeB scheduling algorithm may decide about the allocation of uplink resources to the users. UEs that do not have data in their buffer do temporarily not need uplink resources until the buffer is filled again by the user application. This unused resources may temporarily be allocated to other UEs. Similar methods are described in US 2006/0189334 and US 2006/0209869.

For bursty traffic in uplink, the buffer filling status varies significantly in short time intervals. Therefore, the scheduling information is updated frequently. The scheduler will frequently revise its scheduling decisions based on the updated information. Since the updated decisions need to be signaled to the UEs, this will lead to high downlink signaling traffic.

Furthermore, the delay, i.e. the scheduling delay or scheduling latency, between sending the SI and applying the grant in the UE is quite long compared to application delay requirements. For example, the delay can amount to 40 ms for a 10 ms transmission time interval (TTI). In particular, the scheduling delay adds up to other delays in the transmission network and therefore it may be difficult to guarantee the quality of service for delay sensitive applications. Furthermore, high downlink signaling traffic requires a big amount of the available NodeB transmission power and will consequently reduce the used data throughput in downlink. This fact has a negative influence on HSDPA traffic.

It is therefore an object of the present invention to provide an optimization of the traffic in mobile networks, in particular to provide an optimization of available common uplink transmission resources in radio access networks.

### Summary of the invention

According to the present invention a radio access network assigns to each terminal a specific classification tag depending on an internal buffer filling status information, which each terminal sends to the access network. Furthermore, the access network allocates to the terminals a specific static amount or a dynamic amount of uplink resources depending on said assigned classification tag.

Preferably, the internal buffer filling status information is reported in uplink from the terminal to the access network via scheduling information. Thus, the present invention provides a scheduling concept by predicting traffic characteristics of the application services (i.e. application service type) based on the internal buffer filling status of each terminal.

According to a preferred embodiment of the present invention specific criteria are defined to classify each terminal. The access network assigns to a terminal a first classification tag if its internal buffer filling status is below a specific threshold or a second classification tag if its internal buffer filling status is above said threshold. In case that the first classification tag is assigned to a terminal, said terminal belongs to a so called passive user, since the internal buffer filling status of said terminal is below a specific threshold. On the other hand, in case that the second classification tag is assigned to a terminal, said terminal belongs to a so called active user, since the internal buffer filling status of said terminal is above a specific threshold.

That is, depending on the assigned classification tag each terminal is classified to belong to an active or a passive user. According to said classification the access network generates scheduling decisions optimized to meet classification specific service requirements. To realize such optimization a scheduler of the access network is adapted accordingly. Said scheduler allocates a specific static amount of uplink transmission resources to the so called passive users. An advantage of allocating a specific static amount of uplink transmission resources to a terminal is that said terminal can use such allocated grant immediately without sending a request to the access network. On the other hand, said scheduler is also adapted to allocate a dynamic amount of uplink transmission resources to the so called active users.

The access network may assign more than two different classification tags to the plurality of terminals. Preferably, one of said classification tags will always define that the access network assigns a dynamic amount of uplink transmission resources to specific terminals. The remaining classification tags may define different static amounts of uplink transmission resources. In such case the uplink transmission resources are allocated to the terminals in a more precisely manner.

An advantage of the scheduling strategy according to the present invention is that for application services generating bursty traffic delay is reduced. Therefore, a better quality of service is provided for applications using bursty transmission. This will increase the performance for applications like gaming or TCP acknowledges and will lead to a better quality of service for these applications. A further advantage of the present invention is that downlink signaling traffic is reduced. The application of the above explained scheduling strategy for the passive users can significantly reduce the signal processing effort in the scheduler of the access network, which directly leads to lower hardware costs with respect to the access network. Additionally, the concept according to the present invention is flexible and is tunable with respect to customer needs.

According to a further embodiment of the present invention the access network is a UMTS Terrestrial Radio Access Network (UTRAN). In this case the receivers and transmitters, which are part of the access network, are usually called NodeB's. The terminals are usually called User Equipment (UE) and perform the uplink communication according to High Speed Uplink Packet Access (HSUPA) service. Thus, according to the present invention the NodeB hardware costs can be reduced, since the signal processing effort in a NodeB HSUPA scheduler is significantly reduced. Furthermore, the present invention provides an uplink transmission technology UMTS HSUPA, which is optimized for specific packet applications. In particular, the signaling traffic reduction in downlink according to the present invention saves NodeB downlink transmission power and consequently minimizes the impact of HSUPA on HSDPA data throughput.

HSUPA is one of the key services introduced with UMTS Release 6. The present invention provides an optimization of available common uplink transmission resources in radio access networks. Therefore, the scheduling concept according to the present invention increases the performance of an UTRAN especially for packet services, which will become dominant in the future. This is achieved by optimizing at the same time delay sensitive applications as well as data intensive applications.

In a further embodiment a hysteresis timer is introduced to prevent the scheduler from fast switching between different classification tags assigned to one terminal, in case the user application data would cause fast toggling therebetween. Such fast toggling may occur in case the switching criteria are not properly set.

Due to the allocation of a specific classification tag to each terminal based on the scheduling information transmitted from each terminal to the access network, the inventive scheduling concept may be called "Active Passive Scheduling Concept".

The invention is not restricted to these scheduling strategies for the identified classes. Also other scheduling strategies can be applied to satisfy the different optimization targets which are "short scheduling delay" and "high data throughput".

These and other aspects of the invention will be apparent from and elucidated with reference to the embodiments thereafter.

### Brief description of the drawing

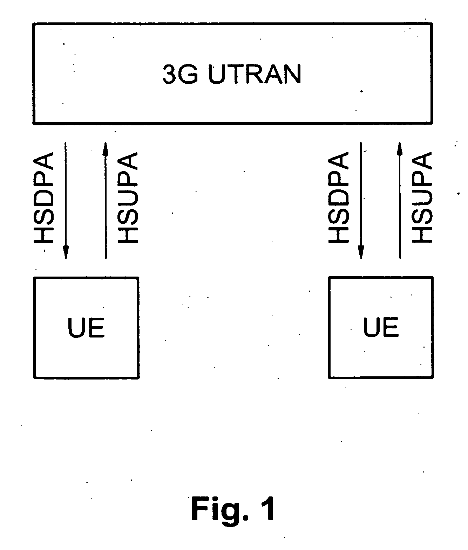

- Figure 1: shows a UMTS system comprising a 3G UTRAN and two UEs.

### Detailed description of the drawing

Figure 1 shows a UMTS system comprising a 3G UTRAN and two UEs. The present invention provides a scheduling concept for uplink transmission from terminals to an access network, wherein in future releases of 3G UTRAN said uplink transmission is referred to as HSUPA. The following description refers to such future UMTS system using HSUPA for the uplink transmission. However, the method according to the present invention is also applicable in other mobile communication standards.

The filling status of the UEs internal data buffers are reported from the UEs to a NodeB (not shown) of the UTRAN via scheduling information (SI) in uplink. The scheduling concept according to the present invention, which is applicable to HSUPA, is based on the prediction of user traffic characteristics using the buffer filling status report of the UEs.

Provided that the data within a UE, that is entering the buffer thereof, can leave it in a reasonable short time, since the data is not accumulated in the buffer, the NodeB classifies each UE, wherein the classification is based on the internal buffer filling status of each UE.

In the example shown in Figure 1 two situations may occur. In a first situation the UE has a relatively low internal buffer filling status, which is below a specific threshold. Said threshold can be determined depending on the application. In a second situation the UE has a relatively high internal buffer filling status, which is above said threshold. It depends on the data characteristics provided on application level in which of said situations the UE is. In particular, each UE can change between the first and the second situation over time, i.e. dependent on the application. A UE might be in the first situation (relatively low internal buffer filling status) for some time and change to the second situation (relatively high internal buffer filling status), when the present application fills a bigger amount of data into the buffer. After the data is completely sent over the air interface the UE may get back to the first situation, depending on the internal buffer filling status and the previously determined threshold, which separates the first and the second situation.

Although the NodeB HSUPA scheduler (not shown) does not have explicit knowledge of the application service type, it can identify both UE situations by monitoring the filling status of the buffer, for example by exploiting the scheduling information which the UE sends to the UTRAN. Therefore, the NodeB HSUPA scheduler can predict the application service type and the related traffic characteristics.

In the following, some examples for different application types are listed, which bring a UE into the first situation. For example, gaming, web-browsing (i.e. site requests and TCP acknowledges in uplink), and file download (i.e. TCP acknowledges in uplink) cause a low, bursty traffic in uplink, but require short delay, i.e. stringent delay requirement. In such applications the internal buffer filling status will be relatively low, that is below a specific threshold.

On the other hand, in the following applications there will be a relatively high internal buffer filling status above said threshold. For example, file upload and e-mail upload cause a constant high traffic over a certain time in uplink. In such applications the delay is not as critical and therefore a relaxed delay requirement will be sufficient.

The UTRAN shown in Figure 1 is adapted to classify each of the UEs according to the internal buffer filling status thereof. In the example of Figure 1 two criteria are defined based on the internal buffer filling status of each UE to classify users being in either the first or the second situation. Users in the first situation are classified to belong to a first class and are called passive users, since the UE of such users has a relatively low internal buffer filling status. On the other hand, users in the second situation are classified to belong to a second class and are called active users, since the UE of such users has a relatively high internal buffer filling status.

Depending on the class of an UE, different scheduling strategies are applied. In case that the UE belongs to the first class, the HSUPA scheduler of the UTRAN allocates a certain part of the uplink transmission resources statically to said UE and accounts for the burstiness of the data transmission by considering a certain activity factor. All UEs of said first class can use the allocated passive grant immediately without sending scheduling information to the UTRAN. Hence, said UE is allowed to send data without any additional delay. This case is called passive scheduling.

On the other hand, if the UE belongs to the second class, the HSUPA scheduler of the UTRAN allocates a certain part of the uplink transmission resources dynamically to said UE. Such dynamic allocation may be performed according to additional scheduling criteria like fairness aspects, channel quality and/or UE capabilities. This case is called active scheduling.

According to the present invention, the strategy of the HSUPA scheduler for generating scheduling decisions may be different for each class and can separately be optimized to meet class specific service requirements. Criteria are defined to decide to which class each terminal (user) belongs to and when to switch from one class to another.

## Claims

1. Method for allocating available common uplink transmission resources to a plurality of terminals transmitting packet data information to an access network, the method comprising the steps of:
- sending internal buffer filling status information from the terminals to the access network, and
- allocating to the terminals a specific amount of the uplink transmission resources depending on the internal buffer filling status information,
**characterized by**
- assigning to the terminals a specific classification tag depending on the internal buffer filling status information, and
- allocating to the terminals a specific static amount or a dynamic amount of uplink transmission resources depending on the assigned classification tag,
wherein the assigning and allocating steps are performed by the access network, and wherein switching between different classification tags assigned to one terminal is performed by a hysteresis timer.

2. Method according to claim 1, further comprising the step of assigning to a terminal a first classification tag if its internal buffer filling status is below a specific threshold or a second classification tag if its internal buffer filling status is above said threshold.

3. Method according to claim 2, further comprising the step of allocating to a terminal a specific static amount of uplink transmission resources if it is assigned to the first classification tag and a dynamic amount of uplink transmission resources if it is assigned to the second classification tag.

4. Method according to claim 1, wherein in uplink the terminals report their internal buffer filling status information to the access network via scheduling information.

5. Method according to claim 1, wherein the access network is a UMTS Terrestrial Radio Access Network (UTRAN) and the terminals perform the uplink communication according to High Speed Uplink Packet Access (HSUPA) service.

6. Radio access network, comprising controllers, terminals, and base stations, wherein each base station includes transmitters, receivers, and a scheduler, and wherein the scheduler is adapted to
- assign to the associated terminals a specific classification tag depending on an internal buffer filling status information received from said terminals,
- allocate to the terminals a specific static amount or a dynamic amount of uplink transmission resources depending on the assigned classification tagₙ and wherein switching between different classification tags assigned to one terminal is performed by an hysteresis timer.

7. Radio access network according to claim 6, wherein the radio access network is a UMTS Terrestrial Radio Access Network (UTRAN), the receivers and transmitters are NodeB's, and the controllers are Radio Network Controllers.

## Patentansprüche

1. Verfahren zum Zuordnen von verfügbaren gemeinsamen Aufwärtsübertragungsressourcen zu einer Mehrzahl von Endgeräten, welche Paketdateninformationen an ein Zugangsnetzwerk übertragen, wobei das Verfahren die folgenden Schritte umfasst:
- Senden von Informationen über den Füllstandstatus des internen Puffers von den Endgeräten an das Zugangsnetzwerk, und
- Zuordnen einer spezifischen Menge von Aufwärtsübertragungsressourcen, in Abhängigkeit von den Informationen über den Füllstandstatus des internen Puffers, zu den Endgeräten,
**gekennzeichnet durch**
- Zuteilen einer spezifischen Klassifizierungsmarkierung, in Abhängigkeit von den Informationen über den Füllstandstatus des internen Puffers, an die Endgeräte, und
- Zuordnen einer spezifischen statischen Menge oder einer dynamischen Menge von Aufwärtsübertragungsressourcen, in Abhängigkeit von der zugeteilten Klassifizierungsmarkierung, an die Endgeräte,
wobei die Schritte des Zuteilens und des Zuordnens vom Zugangsnetzwerk ausgeführt werden, und wobei das Wechseln zwischen verschiedenen, einem Endgerät zugeteilten Klassifizierungsmarkierungen von einem Hysterese-Timer ausgeführt wird.

2. Verfahren nach Anspruch 1, weiterhin umfassend den Schritt des Zuteilens einer ersten Klassifizierungsmarkierung an ein Endgerät, wenn der Füllstandstatus seines internen Puffers unter einem bestimmten Grenzwert liegt, oder einer zweiten Klassifizierungsmarkierung, wenn der Füllstandstatus seines internen Puffers über einem bestimmten Grenzwert liegt.

3. Verfahren nach Anspruch 2, weiterhin umfassend den Schritt des Zuordnens einer spezifischen statischen Menge von Aufwärtsübertragungsressourcen an ein Endgerät, wenn sie der ersten Klassifizierungsmarkierung zugeteilt wird, und einer dynamischen Menge von Aufwärtsübertragungsressourcen, wenn sie der zweiten Klassifizierungsmarkierung zugeteilt wird.

4. Verfahren nach Anspruch 1, wobei die Endgeräte in der Aufwärtsübertragung die Informationen über den Füllstandstatus ihrer internen Puffer anhand von Zeitplanungsinformationen an das Zugangsnetzwerk melden.

5. Verfahren nach Anspruch 1, wobei das Zugangsnetzwerk ein terrestrisches UMTS-Funkzugangsnetzwerk (UTRAN) ist und die Endgeräte die Aufwärtsübertragung gemäß einem Hochgeschwindigkeits-Aufwärtspaketzugangsdienst (HSUPA) durchführen.

6. Funkzugangsnetzwerk mit Controllern, Endgeräten und Basisstationen, wobei jede Basisstation Sender, Empfänger und eine Zeitplanungsvorrichtung umfasst, und wobei die Zeitplanungsvorrichtung für das Durchführen der folgenden Schritte ausgelegt ist:
- Zuteilen, an die assoziierten Endgeräte, einer spezifischen Klassifizierungsmarkierung in Abhängigkeit von den von den besagten Endgeräten empfangenen Informationen über den Füllstandstatus eines internen Puffers,
- Zuordnen, zu den Endgeräten, einer spezifischen statischen Menge oder einer dynamischen Menge von Aufwärtsübertragungsressourcen in Abhängigkeit von den zugeteilten Klassifizierungsmarkierungen, und wobei das Wechseln zwischen verschiedenen, einem Endgerät zugeteilten Klassifizierungsmarkierungen durch einen Hysterese-Timer ausgeführt wird.

7. Funkzugangsnetzwerk nach Anspruch 6, wobei das Zugangsnetzwerk ein terrestrisches UMTS-Funkzugangsnetzwerk (UTRAN) ist, die Empfänger und Sender B-Knoten sind und die Controller Funknetzwerk-Controller sind.

## Revendications

1. Procédé d'attribution des ressources de transmission sur liaison montante commune disponibles à une pluralité de terminaux transmettant des informations de données en paquet à un réseau d'accès, le procédé comprenant les étapes suivantes :
- envoi d'une information d'état de remplissage du tampon interne des terminaux au réseau d'accès ; et
- attribution aux terminaux d'une quantité spécifique de ressources de transmission sur liaison montante en fonction de l'information d'état de remplissage du tampon interne,
**caractérisé par**
- affectation aux terminaux d'une balise de classification spécifique en fonction de l'information d'état de remplissage du tampon interne et,
- attribution aux terminaux d'une quantité statique spécifique ou d'une quantité dynamique de ressources de transmission sur liaison montante en fonction de la balise de classification affectée, les étapes d'affectation et d'attribution étant exécutées par le réseau d'accès, et la commutation entre les différentes balises de classification affectées à un terminal étant effectuée par un temporisateur à hystérésis.

2. Procédé selon la revendication 1, comprenant en outre l'étape d'affectation à un terminal d'une première balise de classification si l'état de remplissage de son tampon interne est au-dessous d'un seuil spécifique ou d'une deuxième balise de classification si l'état de remplissage de son tampon interne est au-dessus dudit seuil.

3. Procédé selon la revendication 2, comprenant en outre l'étape d'attribution à un terminal d'une quantité statique spécifique de ressources de transmission sur liaison montante s'il est affecté à la première balise de classification et d'une quantité dynamique de ressources de transmission sur liaison montante s'il est affecté à la deuxième balise de classification.

4. Procédé selon la revendication 1, selon lequel, dans la liaison montante, les terminaux notifient leur information d'état de remplissage du tampon interne au réseau d'accès par le biais d'une information d'ordonnancement.

5. Procédé selon la revendication 1, selon lequel le réseau d'accès est un réseau d'accès radioélectrique terrestre UMTS (UTRAN) et les terminaux réalisent la communication de liaison montante conformément au service d'accès en paquets sur liaison montante à haut débit (HSUPA).

6. Réseau d'accès radioélectrique, comprenant des contrôleurs, des terminaux et des stations de base, avec lequel chaque station de base comprend des émetteurs, des récepteurs et un ordonnanceur, et avec lequel l'ordonnanceur est adapté pour
- affecter aux terminaux associés une balise de classification spécifique en fonction d'une information d'état de remplissage du tampon interne reçue de la part desdits terminaux,
- attribuer aux terminaux une quantité statique spécifique ou une quantité dynamique de ressources de transmission sur liaison montante en fonction de la balise de classification affectée, et avec lequel la commutation entre les différentes balises de classification affectées à un terminal est effectuée par un temporisateur à hystérésis.

7. Réseau d'accès radioélectrique selon la revendication 6, avec lequel le réseau d'accès radioélectrique est un réseau d'accès radioélectrique terrestre UMTS (UTRAN), les récepteurs et les émetteurs étant des noeuds B et les contrôleurs étant des contrôleurs de réseau radioélectrique.
